# EUROPEAN PATENT APPLICATION

(11) **EP 3 051 379 A1**
(43) Date of publication of application: **03.08.2016**
(21) Application number: 16152546.4
(22) Date of filing: 25.01.2016
(51) Int. Cl.: G06F 1/16, G07C 5/00

(54) **A VEHICLE FAULT DIAGNOSIS TESTER AND A VEHICLE FAULT DIAGNOSIS SYSTEM**

(30) Priority: 28.01.2015 CN 201510041752
(71) Applicant: Robert Bosch GmbH, 70442 Stuttgart (DE)
(72) Inventor: HUA, Yang, 200335 Shanghai (CN)
(74) Representative: Bee, Joachim

(57) **Abstract**

The invention relates to a vehicle fault diagnosis tester and a vehicle fault diagnosis system comprising the same. The vehicle fault diagnosis tester has a command input module, a maintenance guidance display module and a wireless communication module, wherein the vehicle fault diagnosis tester is a wearable device, and the command input module is a non-contact type. The vehicle fault diagnosis system is used for a vehicle with a data link connector (DLC), and comprises an OBD dongle and the above described vehicle fault diagnosis tester. The OBD dongle can be inserted into the DLC, collect vehicle diagnosis data from the DLC and sends the vehicle diagnosis data to the wireless communication module of the vehicle fault diagnosis tester in a wireless way. The invention introduces a wearable device having a non-contact command input module into the technical field of automobile fault diagnosing, and introduces the concept of guidance maintenance into the vehicle fault diagnosing system so that the maintenance operation becomes interesting, convenient and efficient, and the maintenance personnel do not have to frequently switch between information reading and maintenance operation.

## Description

### FIELD OF THE INVENTION

The invention relates to the technical field of vehicle fault diagnosing, in particular, to a vehicle fault diagnosis tester and a vehicle fault diagnosis system comprising the same.

### BACKGROUND

With social development, high-tech innovations in automobile industry are emerging in an endless stream, and the safety, performance, comfortability or the like of automobile are being improved continuously. On the other hand, the electronic control system of automobile is becoming more and more complicated, making diagnosis of faults thereof more and more difficult. When a fault light on the instrument panel of vehicle is on, it means that the vehicle has a certain fault. In order to ascertain and determine the fault of vehicle rapidly and directly, typically, a specially designed instrument is used as an auxiliary maintenance and service tool for automobiles so that it can read fault codes in the electronic control unit of vehicle and find out the reason for which faults might occur, thus facilitating further maintenance of vehicle. Such an instrument for acquiring fault codes and conducting relevant tests is vehicle fault diagnosis tester.

The vehicle fault diagnosis tester analyzes and detects various components and systems of an automobile comprehensively so as to complete a non-disassembly detecting and diagnosing operation of automobile. Current vehicle fault diagnosis testers comprise various forms, such as embedded type and computed-connected type, etc. They are expensive in price, inconvenient to use, bulky, and difficult to carry; the latest diagnosis tester that has been produced is handheld diagnosis tester, e.g., a diagnosis tester that is operated by using a smart-phone or a tablet computer. In this latest diagnosis tester, a diagnosing interface is simplified as a small OBD dongle. After the vehicle fault information is acquired by the OBD dongle, it is transmitted wirelessly (e.g., via Wi-Fi or Blue-Tooth) to the smart-phone or tablet computer (which has functions of command input, maintenance guidance, wireless communication, etc.). Maintenance personnel can input commands via keys or a touch screen of the smart-phone or tablet computer, and then conduct maintenance using maintenance guidance information displayed on the screen. As can be seen, while guide wires are omitted and weight is reduced in this way of diagnosing, maintenance personnel still has to hold the tablet computer (or the smart-phone), watch the computer in one moment and conduct maintenance in the next moment. Such a frequency shift of operation will reduce efficiency in maintenance, is extremely inconvenient, and will also smear the computer.

### SUMMARY OF THE INVENTION

The technical problem to be solved by the invention is to provide a vehicle fault diagnosis tester that can overcome the defects in the prior art and a vehicle fault diagnosis system comprising the same.

In order to address the above described technical problem, a first aspect of the invention provides a vehicle fault diagnosis tester which has a command input module, a maintenance guidance display module and a wireless communication module, wherein the vehicle fault diagnosis tester is a wearable device that can be directly worn on the body of maintenance personnel or can be attached to the dress and personal adornment of the maintenance personnel, and the command input module is a non-contact command input module.

Optionally, in the above described vehicle fault diagnosis tester, the wearable device is a wrist-worn product, a foot-worn product or a head-worn product.

Optionally, in the above described vehicle fault diagnosis tester, the head-worn product is in the form of glasses.

Optionally, in the above described vehicle fault diagnosis tester, the positions of the command input module, the maintenance guidance display module and the wireless communication module in the vehicle fault diagnosis tester do not affect the field of view required for the maintenance personnel to complete the maintenance operation.

Optionally, in the above described vehicle fault diagnosis tester, the command input module comprises a microphone capable of collecting voice commands and/or a camera capable of collecting gesture commands or eye movement commands.

Optionally, in the above described vehicle fault diagnosis tester, the command input module and the maintenance guidance display module are located on the same side of the vehicle fault diagnosis tester.

Optionally, in the above described vehicle fault diagnosis tester, the wireless communication module uses Blue-Tooth or Wi-Fi for communication.

Optionally, in the above described vehicle fault diagnosis tester, the maintenance guidance display module is a projector that can present diagnosis information in front of maintenance personnel by means of virtual screen, and the diagnosis information comprises maintenance guidance data.

In order to address the above described technical problem, a second aspect of the invention provides a vehicle fault diagnosis system for a vehicle with a data link connector (DLC), which comprises an OBD dongle and a vehicle fault diagnosis tester according to any in the above described first aspect, wherein the OBD dongle can be inserted into the DLC, collect vehicle diagnosis data from the DLC and sends the vehicle diagnosis data to the wireless communication module of the vehicle fault diagnosis tester in a wireless way.

Optionally, in the above described vehicle fault diagnosis system, the vehicle fault diagnosis system further comprises a server, and the OBD dongle can download data from the server or upload data to the server.

The vehicle fault diagnosis tester and the vehicle fault diagnosis system of the invention introduce a wearable device having a non-contact command input module into the technical field of automobile fault diagnosing, and introduce the concept of guidance maintenance into the vehicle fault diagnosing system so that the maintenance operation becomes interesting, convenient and efficient, and the maintenance personnel do not have to frequently switch between information reading and maintenance operation so that operations are facilitated.

### BRIEF DESCRIPTION OF THE DRAWINGS

With reference to the accompanying drawings, the disclosure of the invention will become more apparent. It should be understood that these drawings are merely provided for the purpose of illustration, instead of limiting the scope of protection of the invention, wherein:
Fig. 1 is a schematic perspective view of the vehicle fault diagnosis tester according to an embodiment of the invention; and
Fig. 2 is a schematic block diagram showing the operational principle of the vehicle fault diagnosis system according to an embodiment of the invention.

### DETAILED DESCRIPTION OF THE UTILITY MODEL

The specific embodiments of the invention will be described in detail below with reference to the accompanying drawings.

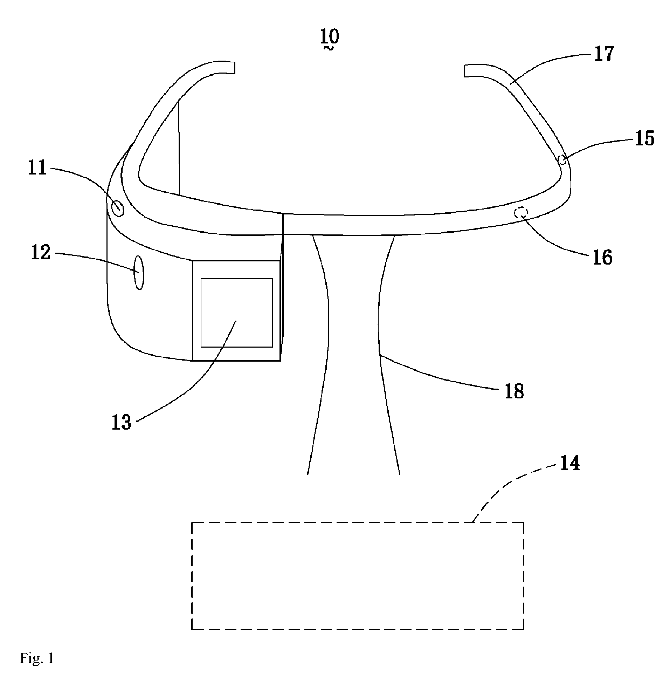

Fig. 1 is a schematic perspective view of the vehicle fault diagnosis tester according to an embodiment of the invention. In Fig. 1, reference sign 10 generally designates a vehicle fault diagnosis tester, 11 designates a microphone, 12 designates a camera, 13 designates a projector, 14 designates a virtual diagnosis interface projected by the projector 13, 15 designates a wireless communication module, 16 designates a data storage module, 17 designates a leg, and 18 designates a nose pad.

As can be seen from the drawings, the vehicle fault diagnosis tester 10 in the present embodiment is a wearable device, which is a head-wearable product in a form similar to glasses so that it can be worn on the head. A main body structure of the vehicle fault diagnosis tester has legs 17 that can be supported on the ears of maintenance personnel and a nose pad 18 that can be supported on the nose of maintenance personnel. When the maintenance personnel are conducting maintenance or service on the vehicle, the vehicle fault diagnosis tester 10 can be stably worn on the head so that the two hands can be freed and used dedicatedly for maintenance and service operation.

It can be understood that in addition to the above illustrated constituent parts or functional modules, the vehicle fault diagnosis tester 10 can further comprise a data processing module that is not illustrated so that it has a data computing and processing function. The data processing module is communicatively connected to the microphone 11, the camera 12, the projector 13, the wireless communication module 15 and the data storage module 16. For example, the data processing module can receive and process diagnosis data from the wireless communication module 15 and use the projector 13 to present the diagnosis information by means of virtual screen according to commands input by maintenance personnel from the microphone 11, the camera 12, etc. In order to broaden the field of view of maintenance personnel as large as possible, various components or modules such as the microphone 11, the camera 12, the projector or the like can be designed to be miniatured to the greatest extent possible. In view that those skilled in the art are already familiar with the principle, structure and function of the data processing module, the data storage module, etc., no detailed description of them will be given in the application.

In the vehicle fault diagnosis tester 10 of the present embodiment, the microphone 11 and the camera 12 are input devices of maintenance personnel's command, and can be a modular constituent part of the vehicle fault diagnosis tester 10. Unlike the prior art, the microphone 11, the camera 12 or the like in the invention are non-contact command input devices so that there is no need for the maintenance personnel to directly contact the vehicle fault diagnosis tester by touching using their hands, thus preventing oil strains on the maintenance personnel's hands from polluting the instruments. As required differently, the vehicle fault diagnosis tester 10 can be also provided with other forms of non-contact command input devices.

The microphone 11 can collect voice commands of maintenance personnel. After collecting voice commands of maintenance personnel, the microphone 11 converts them into communication signals and sends them to the data processing module of the vehicle fault diagnosis tester 10 so as to communicate with the wireless communication module 15 and/or the projector 13 after being processed by the data processing module. It can be understood that as actually required, the microphone 11 can be disposed at any suitable position of the vehicle fault diagnosis tester 10. In the embodiment shown, the microphone 11 is disposed at a position that is located slightly forward on a right side leg of the vehicle fault diagnosis tester 10 so that a mounting position which facilitates operation is provided for the camera 12 and the projector 13. In a different embodiment, in order that the microphone 11 can acquire a voice command that is as clear as possible, in the case that the working effect and operational convenience of other modules are not affected, one can consider disposing the microphone 11 at a position that is adjacent to the mouth of the maintenance personnel as close as possible. The microphone 11 can be embedded into a main body structure of the vehicle fault diagnosis tester 10, or can be fixed in other ways.

The camera 12 can acquire a gesture command of the maintenance personnel. After collecting the gesture commands of maintenance personnel, the camera 12 converts them into communication signals and sends them to the data processing module of the vehicle fault diagnosis tester 10 so as to communicate with the wireless communication module 15 and/or the projector 13 after being processed by the data processing module. It can be understood that as actually required, the camera 12 can be disposed at any suitable position of the vehicle fault diagnosis tester 10. In the embodiment shown, the camera 12 is disposed at a frontmost position on the right side of the vehicle fault diagnosis tester 10 so that it can clearly collect a gesture command of the maintenance personnel. It can be understood that in the case that the working effect and operational convenience of other modules are not affected, one can consider disposing the camera 12 at a frontmost position on the left side of the vehicle fault diagnosis tester 10. The camera 12 can be embedded into a main body structure of the vehicle fault diagnosis tester 10, or can be fixed in other ways.

As the maintenance guidance display module, the projector 13 can present the virtual diagnosis interface14 in front of maintenance personnel in a form of virtual screen so as to display diagnosis information and maintenance guidance data. The position of the projector 13 is set to ensure that the virtual screen is presented to the maintenance personnel at a position that is comfortable for the maintenance personnel to observe, while also not affecting the maintenance and service operations of the maintenance personnel. In different situations, those skilled in the art can consider selecting other forms of maintenance guidance display module. For example, the maintenance guidance display module can project the screen onto the wrist or other positions, and no more specific exemplary positions are given herein. In an alternative embodiment, the microphone 11, the camera 12 and the projector 13 (or other forms of maintenance guidance display module) are disposed at the same side of the vehicle fault diagnosis tester 10 so as to ensure that the field of view of at least one eye of the maintenance personnel is unobstructed and does not affect the maintenance and service operations.

The wireless communication module 15 can be Blue-Tooth or Wi-Fi module or other forms of wireless communication having the same function. The wireless communication module 15 can be disposed at a position that is located rearward on the vehicle fault diagnosis tester 10 or does not affect the other constituent parts or modules. A communication can be achieved between the wireless communication module 15 and other constituent parts or modules of the vehicle fault diagnosis tester 10 via a data line or in a wireless manner. When a data line is used, the data line can be hidden inside the main body structure of the vehicle fault diagnosis tester 10 so that the data line is protected from being damaged by the outside, while also ensuring an aesthetic appearance of the vehicle fault diagnosis tester 10. Like the Blue-Tooth technology, the Wi-Fi wireless fidelity technology also belongs to a short-range wireless technology used in an office, in an operating room or at home. While the wireless communication transmitted by Wi-Fi technology does not have a good quality and the secure performance of data is not as good as Blue-Tooth, the speed of transmission thereof is very fast and reach up to 54 Mbps, thus meeting personal requirements and requirements on and social informatization. Therefore, in the present technical solution, a Wi-Fi wireless communication module can be selected.

The data storage module (e.g., a data storage card) 16 can stored information contents. For example, a screen shot picture can be stored in the data storage card 16 or can be used for copying or printing. Since the data storage card 16 cannot be used for collecting input commands of maintenance personnel, it can be disposed at a position that is located rearward on the vehicle fault diagnosis tester 10 or does not affect the other constituent parts or modules, and can communicate with other constituent parts or modules via a data line or in a wireless manner. Accordingly, when a data line is used, the data line can be hidden inside the main body structure of the vehicle fault diagnosis tester 10 so that the data line is protected from being damaged by the outside, while also ensuring an aesthetic appearance of the vehicle fault diagnosis tester 10.

In a different embodiment, the vehicle fault diagnosis tester 10 can run a different system which is for example but is not limited to the Apple system, the Microsoft system and an Android system, so that at the time of maintenance, page flipping, search functions or the like can be realized for the contents on the virtual screen; these functions can be realized by voice, blink or gesture, etc. Therefore, the maintenance personnel does not have to hold the diagnosis tester with hand, and the maintenance personnel can really execute each step exactly as the device teaches. Thus, the maintenance operation becomes interesting, easy and efficient.

The operational principle of the vehicle fault diagnosis tester 10 will become easier to understand through the following description of the vehicle fault diagnosis system according to the invention.

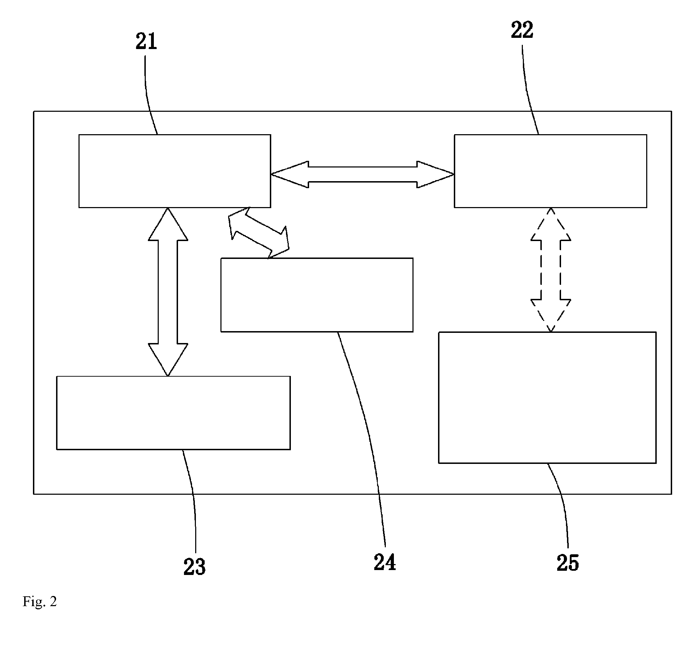

Fig. 2 is a schematic block diagram showing the operational principle of the vehicle fault diagnosis system according to an embodiment of the invention. In Fig. 2, reference sign 21 designates an OBD dongle, 22 designates a vehicle fault diagnosis tester, 23 designates a data link connector, 24 designates a server, and 25 designates a virtual diagnosis interface, wherein the data link connector 23 is socket provided in the vehicle, via which the vehicle fault diagnosis system can read diagnosis data such as fault codes of the vehicle. It can be understood that the vehicle fault diagnosis system according to the present embodiment of the invention can be used for a vehicle with the data link connector 23, and the system comprises the OBD dongle 21 and the vehicle fault diagnosis tester 22 in the form of a wearable device. The OBD dongle 21 can be inserted into the data link connector 23, collect vehicle diagnosis data from the data link connector, and send the vehicle diagnosis data to the wireless communication module of the vehicle fault diagnosis tester 22 in a wireless manner. The system can further comprise the illustrated server 24 which can comprise a cloud server, etc. The vehicle fault diagnosis tester 22 can project the diagnosis interface in the form of virtual screen.

The data link connector 23 and the OBD dongle 21 will be described below. Those skilled in the art will understand that currently, a control computer ECU (electronic control unit) of an electronically controlled fuel injection system of automobile is provided with a fault self-diagnosing system which is mainly used for detecting the operational status of various components of the electronic control system and determine the number of diagnosed faults according to the configurations of the electronic control system. When the self-diagnosing system of an electronic fuel injection automobile detects a fault, on one hand, it activates a protecting function for the fault so as to perform necessary protection on the control system; and on the other hand, it stores the fault in a RAM in the form of fault codes and meanwhile illuminates a fault indicator. At this point, the automobile maintenance personnel can read the fault code of this fault via the data link connector 23 and the OBD dongle 21 for example according to a certain operation program, and then know about the fault indicated by the code by looking up relevant technical data so that a purposeful maintenance can be conducted on the faults of the automobile electronic control system. Generally, reading the fault code is accomplished by inserting the OBD dongle 21 into the data link connector 23. The data link connector 23 is typically located under the instrument panel of automobile and is a female component having 16 pins. Correspondingly, the OBD dongle 21 is a male component, which has wireless communication modules such as Wi-Fi or Blue-Tooth or the like provided insides, and even GPS or 2G/3G/4G communication modules for transmitting the acquired diagnosis information to the server 24 or other devices or cloud servers and also for transmitting the acquired diagnosis information to the vehicle fault diagnosis tester 22. The communication between the OBD dongle 21 and the ECU typically uses a K line or CAN line communication protocol.

In this embodiment, the vehicle fault diagnosis tester 22 in the form of a wearable device is also equipped with wireless communication modules such as Blue-Tooth or Wi-Fi or the like. Herein, the wearable device is portable device that can be directly worn on the human body or can be attached to the dress and personal adornment of the user. For example, the vehicle fault diagnosis tester in the vehicle fault diagnosis system of the invention can be the vehicle fault diagnosis tester 10 in the form of glasses shown in Fig. 1. In the invention, the wearable device in not only a hardware device, but also can achieve powerful functions through software support, data interaction and cloud server interaction. It can be understood that existing wearable devices in the prior art are mostly in the form of portable fittings that have a part of computing function and can be connected to the cell-phone and various types of terminals. For example, mainstream product modalities comprise wrist-worn products which are supported on the wrist (including watches and wrist-worn products or the like), foot-worn products which are supported on the foot (including shoes, socks or other leg-worn products in the future or the like), head-worn products which are supported on the head (including glasses, helmet, head belt or the like) and various non mainstream product modalities such as intelligent costume, schoolbag, walking stick, ornaments or the like. In the invention, a design of the vehicle fault diagnosis tester can be appropriately selected for these wearable devices as actually required.

Currently, more and more control units are provided on automobiles, thus imposing higher and higher demands on maintenance personnel. For tens of thousands of vehicle models, there are hundreds of thousands of control units and countless vehicle faults, and a single maintenance worker cannot handle all these faults. Therefore, in the invention, various vehicle models and the maintenance information of various faults are provided to the maintenance personnel. In addition to this, a guidance based on symptoms of automobile faults is provided so that the maintenance personnel can perform the maintenance step by step following the prompts. This is an overturning revolution in the maintenance industry, and enables even the automobile owners to do the maintenance by themselves. Since conventional diagnosis testers have to be held by hand and the hardware and operating system have limitations and restrictions, it is very difficult to realize such a function in conventional diagnosis testers.

It is also difficult to conveniently realize maintenance guidance based on symptoms of faults in a smart cell-phone and tablet computer. The maintenance guidance refers to reference data for guiding the maintenance personnel to perform maintenance for the vehicle, relevant information including vehicle circuit diagram and mechanical map, and guidance information based on symptoms of the vehicle. It can be understood that even maintenance guidance data is added into the smart cell-phone or tablet computer, the maintenance personnel will still have to frequently switch between information reading and maintenance operation, which is very inconvenient.

In the invention, since the maintenance personnel does not have to hold the diagnosis tester by hand, he/she can operate at the same time of watching prompts. Meanwhile, advanced operating systems provided by Apple, Mircosoft, Android or the like can be used so that such functions as page flipping, search or the like in the maintenance guiding functions can be realized by voice, blink or gesture, etc. Therefore, the maintenance personnel can really execute each step exactly as the device teaches. Thus, the maintenance operation becomes interesting, easy and efficient.

It can be known from the above description that the invention has the following advantages: 1. a wearable device is introduced into the maintenance field of vehicle, especially in the field of diagnosis tester; 2. a combination of OBD dongle, a vehicle fault diagnosis tester in the form of wearable device, cloud communication and storage is innovatively introduced; 3. the device can be controlled via voice, eye movement or gesture so as to obtain the desired information and maintenance steps; and 4. a concept of guidance maintenance is introduced into the vehicle fault diagnosis system of the invention.

In the invention, the vehicle fault diagnosis tester is designed in the form of a wearable device, such as intelligent glasses, in place of tablet computer. A virtualized presentation of information is realized through a virtual screen in front of eyes, and the device is operated by blinking, sounding or making a gesture. Therefore, both hands of the maintenance personnel are really liberated so that the maintenance personnel can repair the vehicle while watching the information in the virtual screen, thus making the repairing work more flexible, convenient, simple, efficient and interesting. Meanwhile, after introducing maintenance guidance data, a vague search for data can be achieved through voice or the vehicle can be repaired step by step following prompts. Therefore, the repairing efficiency is further improved and fun in repairing is increased so that the maintenance of the increasingly complicated automobile electronic control system is no longer complicated. Also, the wearable device stores tremendous maintenance information, and workers can be guided by blinking, sounding or gesture positioning information to find out the source of fault following prompts step by step, thus rapidly solving the problems.

The description of the preferred embodiments of the invention made with reference to the accompanying drawings is merely exemplary and illustrative; those skilled in the art can make equivalent or similar modification or variations to the preferred embodiments of the invention based on the teaching of the disclosure, which will also fall within the scope of protection defined by the claims of the invention.

## Claims

1. A vehicle fault diagnosis tester comprising a command input module, a maintenance guidance display module and a wireless communication module, **characterized in that** the vehicle fault diagnosis tester is a wearable device that can be directly worn on the body of maintenance personnel or can be attached to the dress and personal adornment of the maintenance personnel, and the command input module is a non-contact command input module.

2. A vehicle fault diagnosis tester according to claim 1, wherein the wearable device is a wrist-worn product, a foot-worn product or a head-worn product.

3. A vehicle fault diagnosis tester according to claim 2, wherein the head-worn product is in the form of glasses.

4. A vehicle fault diagnosis tester according to claim 2, wherein the positions of the command input module, the maintenance guidance display module and the wireless communication module in the vehicle fault diagnosis tester do not affect the field of view required for the maintenance personnel to complete the maintenance operation.

5. A vehicle fault diagnosis tester according to any of claims 1 to 4, wherein the command input module comprises a microphone capable of collecting voice commands and/or a camera capable of collecting gesture commands or eye movement commands.

6. A vehicle fault diagnosis tester according to any of claims 2 to 4, wherein the command input module and the maintenance guidance display module are located on the same side of the vehicle fault diagnosis tester.

7. A vehicle fault diagnosis tester according to any of claims 1 to 4, wherein the wireless communication module uses Blue-Tooth or Wi-Fi for communication.

8. A vehicle fault diagnosis tester according to any of claims 1 to 4, wherein the maintenance guidance display module is a projector that can present diagnosis information in front of maintenance personnel by means of virtual screen, and the diagnosis information comprises maintenance guidance data.

9. A vehicle fault diagnosis system for a vehicle with a data link connector (DLC), which comprises an OBD dongle and a vehicle fault diagnosis tester according to any of claims 1 to 8, wherein the OBD dongle can be inserted into the DLC, collect vehicle diagnosis data from the DLC and sends the vehicle diagnosis data to the wireless communication module of the vehicle fault diagnosis tester in a wireless way

10. A vehicle fault diagnosis system according to claim 9, wherein the vehicle fault diagnosis system further comprises a server, and the OBD dongle can download data from the server or upload data to the server.
